(19) Europäisches Patentamt / European Patent Office / Office européen des brevets

(11) **EP 4 769 243 A1**

(12) **EUROPEAN PATENT APPLICATION**

(43) Date of publication:
**01.07.2026 Bulletin 2026/27**

(21) Application number: **24383490.0**

(22) Date of filing: **31.12.2024**

(51) International Patent Classification (IPC):
**G06N 10/60** (2022.01) **G06N 3/084** (2023.01)
**G06N 3/045** (2023.01)

(52) Cooperative Patent Classification (CPC):
**G06N 3/084; G06N 10/60;** G06N 3/045

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Multiverse Computing S.L.**
**20014 Donostia / San Sebastián (ES)**

(72) Inventors:
• **Orus, Roman**
**20014 Donostia / San Sebastián (ES)**
• **Mugel, Samuel**
**Toronto, M5C 2T2 (CA)**
• **Oillarburu, Jon**
**20014 Donostia / San Sebastián (ES)**

(74) Representative: **Sonnenberg Harrison Partners**
**48, rue Saint-Honoré**
**75001 Paris (FR)**

(54) **QUANTUM STOCHASTIC GRADIENT DESCENT**

(57) A computer-implemented method for training a machine learning model (27) using a training dataset (28) having a set of distributional parameters θ is disclosed. The method comprises selecting (S205) stochastically a subset (28a) from the training dataset (28), calculating a gradient of the subset (28a) by encoding (S210) a cost function representative of the gradient into a quantum circuit, amplifying (S220) the amplitude of the quantum circuit, constructing a likelihood function (S230), and minimising the cost function in a variational quantum circuit to optimise the distributional parameters, extracting the optimised distributional parameters, and entering the optimised distributional parameters into the machine learning model (27).

Fig 2

S200 Aacquisition of training set → S205 Select subset → S210 Encode into quantum circuit

S220 Quantum amplficiation → S230 Construct likelihood function → S240 Evaluating the cost function

S250 Extracting oprimised distributional parameters → S260 Using optimised distributional parameters in the ML model

EP 4 769 243 A1

**Description**

CROSS-REFERENCE TO RELATED APPLICATIONS

None

FIELD OF THE INVENTION

The field of the invention relates to a computer-implemented method and a system for determining parameters of a neural network, such as a large language model.

BACKGROUND OF THE INVENTION

Training a neural network is essentially an optimization procedure that involves determining parameters in the neural network that minimize a loss function. The loss function is the function that compares the target (or known) output values with the predicted output values. The object of the training is to minimize the loss (or difference) between the target output values and the predicted output values. The parameters in the neural network are adjusted to minimise the loss function so that the predicted output values are closer to the target output.

Deep-learning models implemented as neural networks require massive datasets and many model parameters in the neural network need to be tuned. With currently evolving applications of artificial intelligence, it is challenging to find an optimal method to handle the massive amounts of data with reasonable computing cost by reducing the amount of resources required.

The problem of computing a gradient of an expectation function has emerged recently as a tool in the advancement of the state of the art in the computational sciences. Known examples of the applications of computing the gradient of the computational sciences include management of supply-chains, pricing and hedging of financial derivatives, control of traffic lights, as well as in artificial intelligence, machine learning models, natural language processing, visual data processing and voice and audio processing.

Stochastic gradient descent (SGD) is known to be a simple and effective optimization algorithm which has been used in machine learning to minimize the cost function or the error function of a large-scale model with millions of parameters in a set of model parameters, represented by $\theta$. The stochastic gradient descent can also be used for updating online learning models in which new data is continuously added to the online learning model, and the online learning model needs to be updated in substantially real-time. The SGD can process the training data in small batches or individual data points instead of the entire dataset at once.

SGD works by optimizing a cost function $J(\theta)$ with suitable smoothness properties (e.g., differentiable, or subdifferentiable). The goal of SGD is to find a configuration of the parameters in the model that minimizes this cost function. The SGD does not use the actual gradient (which is calculated from the entire dataset used in training the model). SGD estimates the gradient using a randomly selected subset of the data in the dataset. The use of the selected subset is able to reduce the computational burden on the computing resources and therefore enables faster iterations but potentially slower convergence.

The general formula for updating the model parameters in the SGD is given by:

$$\theta = \theta - \alpha * \nabla J(\theta) \quad (\text{Eqn. 1})$$

in which $\alpha$ represents the learning rate and $\nabla_J(\theta)$ represents the gradient of the cost function $J(\theta)$ with respect to the model parameters $\theta$. The gradient represents the direction of steepest descent and is calculated as follows:

$$\nabla J(\theta) = \sum (x, y) \in B \nabla L\big(y, f(X; \theta)\big) \quad (\text{Eqn. 2})$$

B represents a mini-batch of training examples (i.e. the subset of the data), x and y are the input variables and the target variables, $f(X; \theta)$ is the predicted output of the model for the input variable x and the current set of parameters $\theta$, and $\nabla L(y, f(X; \theta))$ is the gradient of the loss function L with respect to the predicted output and the target variable y.

The SGD is iterative. In each iteration, the SGD updates the model parameters based on the estimated gradient. A setting, termed "step size" ( or learning rate) determines the size of the update. The learning rate $\alpha$ determines the step size of the parameter update and needs to be chose to balance convergence speed, i.e. use of computing resources, and stability. A slow learning rate will lead to a slow convergence with extensive use of computing resources and a large learning rate can cause the SGD algorithm to overshoot the global minimum and oscillate around the global minimum.

The computation of the stochastic gradient remains challenging and still requires a high computational burden.

SGD has also several known limitations. For example, the SGD tends to converge to sub-optimal solutions and the parameters of the learning model have to be carefully selected.

Another tool for gradient estimation for optimizing large learning models is a Monte Carlo estimator. The Monte Carlo estimator is described, for example, by Shakir Mohamed et al "Monte Carlo Gradient Estimation in Machine Learning", Journal of Machine Learning Research 21 (2020). A computation of a general probabilistic objective $\mathcal{F}(\theta)$ is presented in the form of a mean-value analysis:

$$\mathcal{F}(\boldsymbol{\theta}) := \int p(\mathbf{x}; \boldsymbol{\theta}) f(\mathbf{x}; \boldsymbol{\phi}) \mathrm{d}\mathbf{x} \qquad \text{(Eqn. 3)}$$

A function f(x) of an input variable x having structural parameters $\phi$ is evaluated on average with respect to an input distribution $p(x; \theta)$ with distributional parameters $\theta$. The input variable x is multidimensional real-world data. In this equation, f is the cost function (also termed an objective function), and $p(x; \theta)$ is a measure and $dx$ is a training data. The distributional parameters $\theta$ are very large parameters, for example in form of multidimensional vectors. To calculate the distributional parameters $\theta$, the gradient function is used:

$$\tilde{\eta} = \nabla_\theta \mathbb{E}_{p(x,\theta)}[f(x)] = \mathbb{E}_{p(x,\theta)}[f(m)\nabla_\theta \log p(x, \theta] \qquad \text{(Eqn.4)}$$

where $\nabla_\theta \log p(x, \theta)$ is the Monte Carlo gradient estimate.

Eqn. 4 is the sensitivity analysis of the function f or, in other words, the gradient of the expectation with respect to the distributional parameters q. When the evaluation of the cost function starts, the distributional parameters $\theta$ are fixed values and subsequently the distributional parameters $\theta$ are slightly changed for all possible values of $p(x; \theta)$, $f(x)$, $\theta$ and their combinations. The possible values are, for example, chosen randomly and termed initial guesses. It is observed if the $\mathcal{F}(\theta)$ is getting smaller or bigger. The goal of this estimation is to find a global minimum of $\mathcal{F}(\theta)$.

One known issue with this approach is that the Monte Carlo estimator may find a local minimum instead of a true global minimum. This issue can be overcome by increasing the amount of computational time to find the global minimum and thus increase the computational burden. The computation burden can be significant since, for a large data set, a number of the dimensions can be of the order of tens of thousands.

Methods to speed up the Monte-Carlo algorithm are known. For example, Montanaro, "Quantum Speedup of Monte Carlo methods", arXiv:1504.06987v3 [quant-ph], accessible at https://doi.org/10.48550/arXiv.1504.06987 (accessed on 22 April 2024), teaches a quantum algorithm which can accelerate Monte Carlo methods.

SUMMARY OF THE INVENTION

This document provides a method to accelerate the determination of the parameters in the model, by computing of the stochastic gradient using a quantum method. The method enables accelerating processing and increasing an accuracy of computing the stochastic gradient descent, as well as reducing the computational burden.

DESCRIPTION OF THE FIGURES

Fig. 1 shows an overview of a computing system used to implement this method.
Fig. 2 shows a flow diagram of the method.
Fig. 3 illustrate quantum amplification.
Fig. 4 illustrates maximum likelihood estimation.
Fig. 5 illustrates a variational quantum circuit.

DETAILED DESCRIPTION OF THE INVENTION

The invention will now be described on the basis of the drawings. It will be understood that the embodiments and aspects of the invention described herein are only examples and do not limit the protective scope of the claims in any way. The invention is defined by the claims and their equivalents. It will be understood that features of one aspect or embodiment of the invention can be combined with a feature of a different aspect or aspects and/or embodiments of the invention.

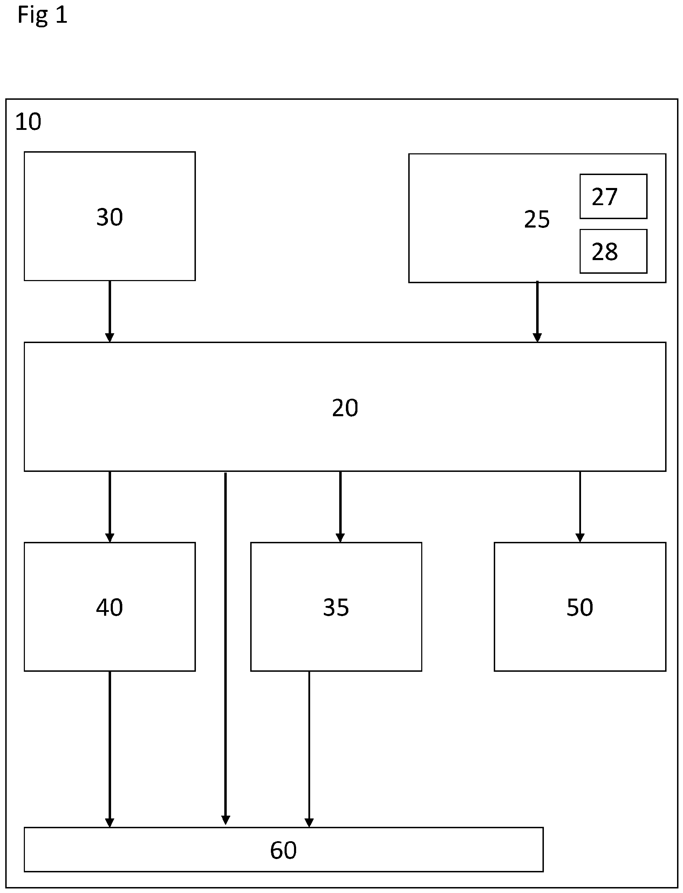

Fig. 1 shows an overview of a typical hybrid classical-quantum system which can be used for performing the method set out in this document. Fig. 1 shows an overview of a computing system 10 for implementing the method of this document. The computing system 10 is, for example, a hybrid quantum and classical system and comprises, in an example, a (classical) central processing unit 20 which is connected to a data storage unit 25 (i.e., one or more memory devices), and a plurality of input/output devices 30. The input/output devices 30 enable input of one or more images and an output of a result for the one or more of the images.

A graphics processing unit 35 for processing vector calculations and a field programmable gate array (FGPA) 40 for control logic that can also be connected to the central processing unit 20. A quantum processor 50 (also termed quantum accelerator) is connected to the classical central processing unit 20. In an alternative embodiment, the quantum processor 50 is emulated on a classical processor.

In one implementation of the computing system 10, the quantum processor 50 is a gate-based quantum processor. It is also possible to use a quantum processor 50 which is a quantum annealing system. The computing system 10 is connected to a computer network 60, such as the Internet. It will be appreciated that the computing system 10 of Fig. 1 is merely exemplary and other units or elements may be present in the computing system 10. It will also be appreciated that there may be many input/output (I/O) devices 30 located at multiple locations and that there may be a plurality of data storage units 25 also located at multiple locations. The many I/O devices 30 and data storage units 25 are connected by the computer network 60. The data storage units 25 may contain a learning model 27 and a training dataset 28.

The approach adopted in this document is to replace the classical Monte Carlo sampling method by a Quantum Amplitude Amplification followed by implementing a maximum likelihood algorithm using a variational quantum circuit.

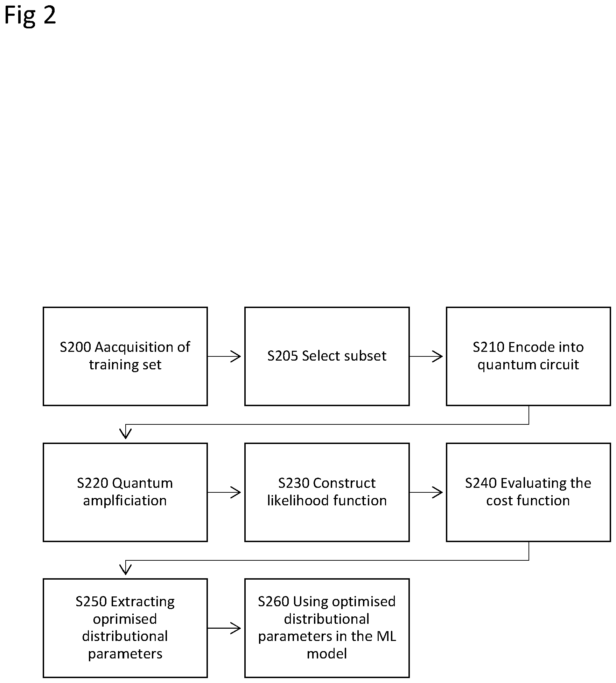

The method will now be outlined as shown in Fig. 2. In a first step S200, the training set 28 is acquired. It is necessary to establish the set of distributional parameters $\theta$ for which the cost function is a minimum. This would be done classically by a Monte Carlo technique to minimise the function $\mathcal{F}(\theta)$, as given above in Eqn. 3. The set of distributional parameters $\theta$ represent the physical parameters. For example, in a travelling salesperson problem, the set of distributional parameters $\theta$ could represent the distance between locations and the time needed to travel between the locations.

In order to reduce the burden of computation resources, only a subset (or mini-batch) of the training set, represented by the variable m, is selected in step S205. Eqn. 4 can be rewritten as follows:

$$\tilde{\eta}_m = \nabla_\theta \mathbb{E}_{\mathrm{p}(\mathrm{m},\theta)}[f(\mathrm{m})] \qquad \text{Eqn. 5}$$

It will be appreciated that $m \in x$, i.e. that all members (m) of the mini-batch are members (x) of the training dataset 28 of training data.

The calculation of the gradient requires calculation of the value for a small change in the set of parameters $\theta$, i.e. $\theta \rightarrow \theta - \varepsilon\tilde{\eta}_{m1}$ and $\theta \rightarrow \theta - \varepsilon\tilde{\eta}_{m2}$ in which $m1$ and $m2$ are two members of the mini-batch. As noted above, the calculation for a complete set of values of the set of parameters $\theta$ would require extensive resources. However, rather than computing the gradient with respect to every parameter, the gradient can be calculated in a random direction.

$$\tilde{\eta}_m \approx \frac{\nabla_\theta \mathbb{E}_{\mathrm{p}(\mathrm{m},\theta+\varepsilon\Delta)}[f(\mathrm{m})] - \nabla_\theta \mathbb{E}_{\mathrm{p}(\mathrm{m},\theta-\varepsilon\Delta)}[f(\mathrm{m})]}{2\,\varepsilon\Delta} \qquad (\text{Eqn. 6})$$

The value of $\Delta \in \{+1, -1\}^n$.

In other words, it is only needed to compute two expectation values $\mathbb{E}_{\mathrm{p}(\mathrm{m},\theta)}$ rather than 2n sets of values, where n is the number of parameters in the mini batch. This is a substantial improvement over traditional Monte-Carlo simulations in which the error is inversely proportional to the square root of the number of evaluations, i.e. error $\propto 1/\sqrt{M}$, where M is the number of evaluations (and is twice the number of parameters).

The objective function can be encoded into a quantum circuit in step S210:

$$|\Psi\rangle = \mathcal{A}|0\rangle_{n+1} = \sqrt{a}\,|\psi_1\rangle|1\rangle] + \sqrt{1-a}\,|\psi_0\rangle|0\rangle \qquad (\text{Eqn. 7})$$

$$\equiv \sin(\phi_a|\psi_1\rangle|1\rangle + \cos t(\phi_a|\psi_0\rangle|0\rangle$$

The probability of the ancillary qubit in the $|1\rangle$ state then gives the Expectation value IE.

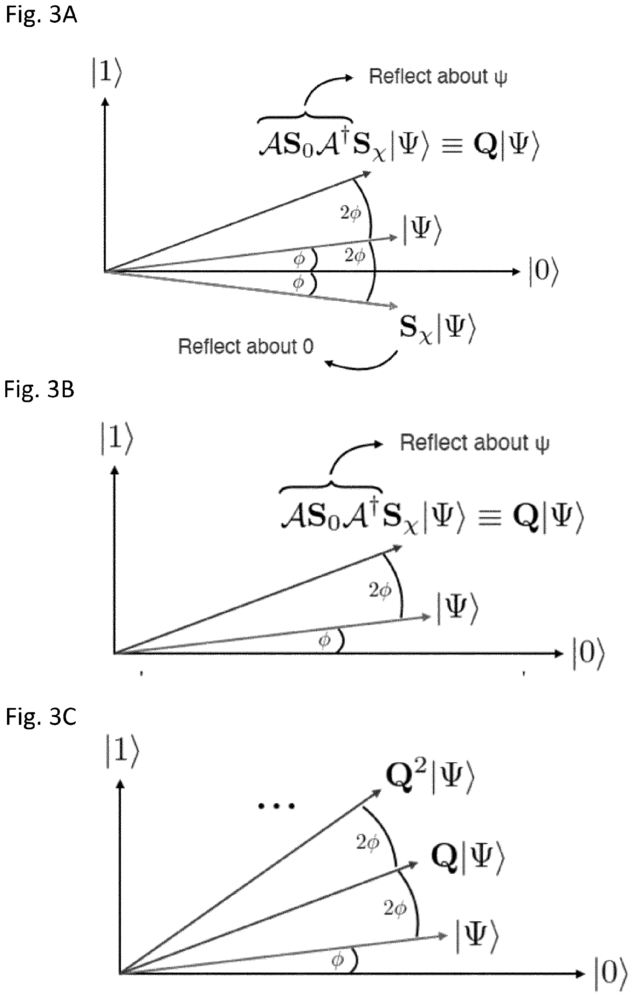

In one aspect of the invention, this probability can be increased in step S220 by the use of quantum amplification, as set out in Brassard et al "Quantum Amplitude Amplification and Estimation", https://arxiv.org/abs/quant-ph/0005055v1, 2 May 2000 (accessed 25 April 2024) and shown in Figs. 3A-3B. The use of the quantum amplitude amplification boosts quadratically the efficiency of computing of the gradients. In this case error $\propto 1/M$. The quantum amplitude amplification amplifies the gradient, and a gradient's amplitude is measured.

It is known from Monte Carlo methods that, if a probabilistic algorithm $\mathcal{P}$ outputs a guess $\mathcal{P}$ *(x)* on input x, then the probabilistic algorithm $\mathcal{P}$ can be repeatedly calculated until a solution for the input x is found. If *X(x, $\mathcal{P}$ (x))=1* with probability *px>0,* it is therefore expected that repeating this calculation 1/px times will, on average, produce a satisfactory solution. This calculation can be implemented by the quantum algorithm $\mathcal{A}$ instead of using the probabilistic algorithm $\mathcal{P}$ .

The quantum algorithm $\mathcal{A}$ produces a quantum superposition $|\Psi_\varphi\rangle$ when the quantum algorithm $\mathcal{A}$ is run on input $\varphi$, wherein $\varphi$ is an angle of a probability. This is illustrated in Fig. 3A.

The amplitude corresponds to square root of probabilities. It is therefore sufficient to repeat the amplitude amplification process by approximately $1/\sqrt{a_x}$ times to achieve the most probabilistic solution of the problem. In the classical Monte Carlo algorithm, the solution would be found after *N* evaluations of the function while the quantum amplitude approximation algorithm achieves the solution after $\sqrt{N}$ evaluations of the function. The probability of the ancillary qubit in one state gives the expectation value.

The goal of the quantum amplitude estimation is therefore to estimate the unknown parameter $\varphi$ contained in the wave function $|\Psi\rangle$ = sin $\varphi$ |good $\rangle$ + cos $_\varphi$|bad $\rangle$, in which *good (state)* and *bad (state)* are given orthogonal state vectors.

Figs. 3A-3C shows quantum amplification boosting for the state $|\Psi\rangle$ having an angle $\phi$, as shown in Fig. 3A. The amplification process is realised by repeatedly applying a unitary operator Q on the state. Fig. 3A shows how the angle of probability $\varphi$ can be multiplied to increase the probability. The amplification process is realized by repeatedly applying a following unitary operator Q:

$$Q = Q\left(\mathcal{A}, \chi\right) = -\mathcal{A}S_0\mathcal{A}^\dagger S_\chi \qquad \text{(Eqn. 8)}$$

wherein $\mathcal{A}$ is the quantum circuit, $\mathcal{A}^\dagger$ is the inverse of $\mathcal{A}$ , and an operator $S_x$ changes the sign from negative to positive of the amplitude of the quantum states:

$$|x\rangle \longmapsto \begin{cases} -|x\rangle & \text{if } \chi(x) = 1 \\ |x\rangle & \text{if } \chi(x) = 0, \end{cases} \qquad \text{(Eqn. 9)}$$

The operator *So* changes the sign of the amplitude if the state is the zero state |0 $\rangle$. It should be understood that after applying the unitary operator Q for *m* times (with *2m* queries), it is possible to obtain the good state with a probability of a least $4m^2$ times larger than with the classical estimation with *2m* times. This results in the quadratic speedup obtained from the amplitude amplification.

$$\mathcal{A}\mathbf{S}_0\mathcal{A}^\dagger = \mathcal{A}(2|0\rangle\langle 0|_{n+1} - \mathbb{I}_{n+1})\mathcal{A}^\dagger$$
$$= 2|\Psi\rangle\langle\Psi| - \mathbb{I}_{n+1} \qquad \text{(Eqn. 10)}$$

It is known from the prior art that repeatedly applying the unitary operator Q for m times on the wave function $|\Psi\rangle$ results in

$$\mathbf{Q}^m|\Psi\rangle = \sin((2m+1)\phi_a)|\psi_1\rangle|1\rangle + \cos((2m+1)\phi_a)|\psi_0\rangle|0\rangle \qquad \text{(Eqn.11)}$$

It is now necessary to estimate the value of $\varphi_a$ in Eqn. 11. The first stage is to make measurements of the good states and the bad states I among the quantum state $Q^m|\Psi\rangle$ for a chosen set of {m}. If N is the number of measurements (shots) and h is the number of measured good states for the quantum state $Q^m|\Psi\rangle$, then likelihood function *L(h,f)* is given:

$$|\Psi\rangle \rightarrow \text{ measure } \quad h_0 \text{ out of } N_0$$
$$\mathbf{Q}|\Psi\rangle \rightarrow \text{ measure } \quad h_1 \text{ out of } N_1$$
$$\mathbf{Q}^2|\Psi\rangle \rightarrow \text{ measure } \quad h_2 \text{ out of } N_2$$
$$\cdots$$

$$L_m(h_m, \phi) = p_m(\phi)^{h_m}\left[1 - p_m(\phi)\right]^{N_m - h_m}$$

$$p_m(\phi) = \sin^2((2m + 1)\phi)$$

$$L(\mathbf{h}, \phi) = \prod_{m=0}^{M} L_m(h_m, \phi) \qquad \hat{\phi} = \max_\phi L(\mathbf{h}, \phi)$$

The second stage of the amplitude estimation algorithm is to combine these Likelihood functions $L_m$ to construct a single Likelihood function $L(h,\varphi)$.

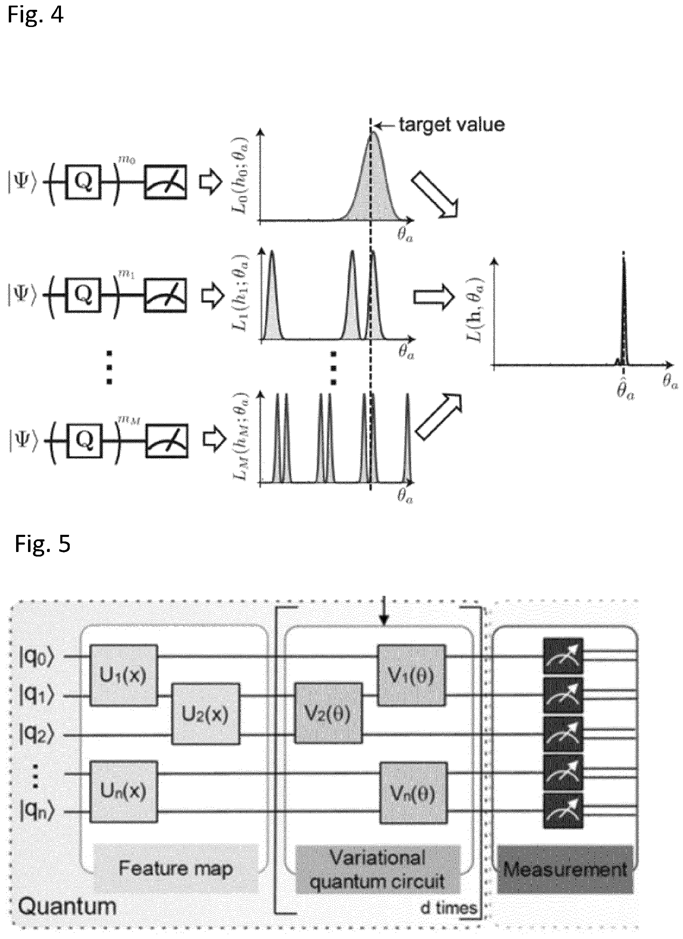

This procedure is summarised in Fig. 4 which shows a use of the amplitude estimation algorithm using the maximum likelihood estimation. When the quantum states Q are prepared, the numbers of measuring good states (h) are obtained as shown on the left part of Fig. 4. Based on the obtained h, the likelihood functions $L_m$ are therefore constructed. These are shown as multiple peaks on the centre of Fig. 4. A single likelihood function $L(h, \varphi_a)$ is established by combining the likelihood functions $L_m$ (right side of Fig. 4). The maximum likelihood algorithm estimates the values of h and phi that maximize the likelihood function L. Superposing a plurality of the peaks on Fig. 4, as seen on the right-hand side, results in observation of one very sharp peak. This sharp peak corresponds to the gradient estimation. It will be appreciated that a and $\varphi$ are uniquely related through a = $\sin^2\varphi$ in the range $0 \leq \varphi \leq \pi/2$ and â:= $\sin 2\varphi$ is the estimate for the value of a.

To implement the maximum likelihood algorithm, a variational quantum circuit is used as shown on Fig. 5. Fig. 5 shows the quantum circuit on the left and the variational quantum circuit (VQC) in the middle. The measurements are carried out on the right-hand side. The variational quantum circuit evaluates the cost function and thus determines gradient of the quantum system.

To be more specific, the outcomes of the measurements in the variational quantum circuit are used to compute both the cost function and its gradient with respect to the parameters of the quantum circuit. The evaluation of this gradient allows to determine the direction in parameter space in which parameters should be changed, in order to keep lowering down the cost function. The parameters could correspond to the parameters in the unitary gates of the quantum circuit, amounting to qubit rotations.

The encoding of the values of the likelihood function L(h, $\varphi$) in the quantum circuit is in step S240 and can be, for example, basic encoding, angle encoding, amplitude encoding. In one particular but not limiting example, the values of the function L(h, $\varphi$) are encoded as y-rotations of the qubits. Other encodings could be, for instance, in the 0/1 values of measurements in the computational basis, in non-orthogonal single-qubit states, and also in other angles defining the qubit in the Bloch sphere, including also if necessary the radius in the Bloch sphere for mixed-state single-qubits.

The variational parameters are input inside qubit rotations. The feature map (learning data) is encoded in the variational quantum circuit. One of plurality qubits is encoded and the quantum circuit becomes variational with some rotations of the qubits inside the variational circuit. The rotation of the qubits is encoded by choosing a different value of the angle $\varphi$. By choosing the best angle $\varphi$, it is possible to obtain a qubit parity.

Parity measurement (also referred to as operator measurement) is a procedure in used for error detection in quantum qubits. A parity measurement checks the equality of two qubits to return a true or false answer, which can be used to determine whether a correction needs to occur. Additional measurements can be made for a system greater than two qubits. Because parity measurement does not measure the state of singular bits but rather gets information about the whole state, it is considered an example of a joint measurement.

By using the parity measurement, it is possible to reduce a huge number of qubits to one qubit. The cost function is minus the parity of the ancillary qubit times the parity of output qubits. This information is then used to evaluate the direction of change of the parameters in the mode which could be for instance the parameters of unitary gates in the quantum circuit, or even the weight values of a neural network. This is then used to re-evaluate the next iteration of the method.

The variational quantum circuit is used to evaluate the cost function in step 240 and find the minimum of the cost function. The minimum of the cost function provides the optimised values of the distributional parameters from the training data subset (28a). These optimised values can be used in step S260 in the machine learning model (27).

REFERENCE NUMERALS

| | |
|---|---|
| 10 | Computing system |
| 20 | Central processing unit |
| 25 | Data storage unit |
| 27 | Learning model |
| 28 | Training dataset |
| 28a | Subset |
| 30 | Output devices |
| 35 | Graphics processing unit |
| 40 | Field programmable gate array |
| 50 | Quantum processor |
| 60 | Computer network |

**Claims**

1. A computer-implemented method for training a machine learning model (27) using a training dataset (28) having a set of distributional parameters θ, the method comprising:

   - selecting (S205) stochastically a subset (28a) from the training dataset (28);
   - calculating a gradient of the subset (28a) by encoding (S210) a cost function representative of the gradient into a quantum circuit, amplifying (S220) the amplitude of the quantum circuit, constructing a likelihood function (S230), and minimising the cost function in a variational quantum circuit to optimise the distributional parameters;
   - extracting the optimised distributional parameters; and
   - entering the optimised distributional parameters into the machine learning model (27).

Fig 1

Fig 2

```
┌─────────────────────┐     ┌─────────────────────┐     ┌─────────────────────┐
│  S200 Aacquisition  │     │                     │     │  S210 Encode into   │
│     of training     │ ──> │ S205 Select subset  │ ──> │   quantum circuit   │
│        set          │     │                     │     │                     │
└─────────────────────┘     └─────────────────────┘     └─────────────────────┘
                                                                    │
        ┌───────────────────────────────────────────────────────────┘
        ▼
┌─────────────────────┐     ┌─────────────────────┐     ┌─────────────────────┐
│   S220 Quantum      │     │  S230 Construct     │     │ S240 Evaluating the │
│   amplficiation     │ ──> │ likelihood function │ ──> │    cost function    │
│                     │     │                     │     │                     │
└─────────────────────┘     └─────────────────────┘     └─────────────────────┘
                                                                    │
        ┌───────────────────────────────────────────────────────────┘
        ▼
┌─────────────────────┐     ┌─────────────────────┐
│  S250 Extracting    │     │ S260 Using optimised│
│     oprimised       │ ──> │    distributional   │
│   distributional    │     │ parameters in the ML│
│    parameters       │     │        model        │
└─────────────────────┘     └─────────────────────┘
```

Fig. 3A

Fig. 3B

Fig. 3C

Fig. 4

Fig. 5

Europäisches
Patentamt

European
Patent Office

Office européen
des brevets

# EUROPEAN SEARCH REPORT

**Application Number**

EP 24 38 3490

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | RYAN SWEKE ET AL: "Stochastic gradient descent for hybrid quantum-classical optimization", ARXIV.ORG, CORNELL UNIVERSITY LIBRARY, 201 OLIN LIBRARY CORNELL UNIVERSITY ITHACA, NY 14853, 18 August 2020 (2020-08-18), XP081741289, * page 1 - page 23, paragraph 2 * * Appendices A and B * | 1 | INV. G06N10/60 G06N3/084 ADD. G06N3/045 |
| A | KIRILL PLEKHANOV ET AL: "Variational quantum amplitude estimation", ARXIV.ORG, CORNELL UNIVERSITY LIBRARY, 201 OLIN LIBRARY CORNELL UNIVERSITY ITHACA, NY 14853, 28 February 2022 (2022-02-28), XP091156320, * page 1 - page 8, right-hand column, paragraph 2 * | 1 | |
| A,D | Mohamed Shakir ET AL: "Monte Carlo Gradient Estimation in Machine Learning", , 29 September 2020 (2020-09-29), XP093283290, DOI: 10.48550/arXiv.1906.10652 Retrieved from the Internet: URL:https://arxiv.org/pdf/1906.10652 [retrieved on 2025-06-04] * the whole document * | 1 | TECHNICAL FIELDS SEARCHED (IPC) G06N |

-/--

The present search report has been drawn up for all claims

| Place of search | Date of completion of the search | Examiner |
|---|---|---|
| The Hague | 4 June 2025 | Volkmer, Markus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

&: member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 24 38 3490

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | Montanaro Ashley: "Quantum speedup of Monte Carlo methods", arXiv.org, 11 July 2017 (2017-07-11), XP093283289, DOI: 10.48550/arxiv.1504.06987 Retrieved from the Internet: URL:https://arxiv.org/pdf/1504.06987 [retrieved on 2025-06-04] * the whole document * | 1 | |
| A | US 2023/104058 A1 (HOPFMUELLER FLORIAN [DE] ET AL) 6 April 2023 (2023-04-06) * abstract; claims 1-33; figures 1-7 * * paragraph [0053] - paragraph [0146] * | 1 | |

| | | |
|---|---|---|
| | | TECHNICAL FIELDS SEARCHED (IPC) |

The present search report has been drawn up for all claims

| Place of search | Date of completion of the search | Examiner |
|---|---|---|
| The Hague | 4 June 2025 | Volkmer, Markus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 38 3490

This annex lists the patent family members relating to the patent documents cited in the above-mentioned European search report.
The members are as contained in the European Patent Office EDP file on
The European Patent Office is in no way liable for these particulars which are merely given for the purpose of information.

04-06-2025

| Patent document cited in search report | Publication date | Patent family member(s) | Publication date |
|---|---|---|---|
| US 2023104058 A1 | 06-04-2023 | AU 2021285093 A1 | 08-12-2022 |
| | | CA 3177422 A1 | 09-12-2021 |
| | | EP 4162414 A1 | 12-04-2023 |
| | | JP 2023528881 A | 06-07-2023 |
| | | US 2023104058 A1 | 06-04-2023 |
| | | WO 2021243454 A1 | 09-12-2021 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **SHAKIR MOHAMED et al.** Monte Carlo Gradient Estimation in Machine Learning. *Journal of Machine Learning Research*, 2020, vol. 21
- **MONTANARO**. Quantum Speedup of Monte Carlo methods. *arXiv:1504.06987v3*, 22 April 2024, https://doi.org/10.48550/arXiv.1504.06987

- **BRASSARD et al.** *Quantum Amplitude Amplification and Estimation*, 02 May 2000, https://arxiv.org/abs/-quant-ph/0005055v1